# EUROPÄISCHE PATENTSCHRIFT

(11) **EP 1 752 708 B1**
(45) Veröffentlichungstag und Bekanntmachung des Hinweises auf die Patenterteilung: **26.10.2011**
(21) Anmeldenummer: 06013166.1
(22) Anmeldetag: 26.06.2006
(51) Int. Cl.: F23N 5/24

(54) **Verfahren zur Flammerkennung in einem Fahrzeugheizgerät**
Method for flame detection in a vehicle heater
Procédé de détection de flamme dans un dispositif de chauffage de véhicule

(30) Priorität: 09.08.2005 DE 102005037625
(43) Veröffentlichungstag der Anmeldung: 14.02.2007
(73) Patentinhaber: J. Eberspächer GmbH & Co. KG, 73730 Esslingen (DE)
(72) Erfinder: Haefner Michael, 70469 Stuttgart (DE); Sauter, Oliver, 73770 Denkendorf (DE); Schlecht, Patric, 73760 Ostfildern (DE)
(74) Vertreter: Ruttensperger, Bernhard

(56) Entgegenhaltungen:
- EP-A1- 0 271 999
- EP-A2- 0 845 637
- DE-A1- 3 736 690
- DE-A1- 10 143 459

## Beschreibung

Die vorliegende Erfindung betrifft ein Verfahren zur Flammerkennung, also zur Erkennung bzw. Beurteilung des Verbrennungsstatus, in einem Fahrzeugheizgerät, wie es beispielsweise als Standheizung oder Zuheizer in einem Fahrzeug eingesetzt werden kann.

Um bei als Zuheizer oder Standheizungen eingesetzten brennstoffbetriebenen Fahrzeugheizgeräten einen Betrieb mit möglichst wenig Schadstoffemissionen zu gewährleisten, ist es bekannt, Fahrzeugheizgeräte dahingehend zu überwachen, ob Verbrennung stattfindet oder nicht. Hierzu können beispielsweise optisch arbeitende Sensoren eingesetzt werden, die in geeigneten Spektralbereichen Emissionen von bzw. innerhalb des Brennerbereichs eines derartigen Fahrzeugheizgerätes überwachen und dann, wenn Verbrennung auftritt, dies indizierende Signale abgeben. Weiterhin ist es bekannt, im Abgasstrom Sensoren anzuordnen, die die Temperatur der den Brennerbereich verlassenden Strömung überwachen. So lange eine Verbrennung nicht stattfindet, wird diese Temperatur vergleichsweise nieder sein. Findet Verbrennung statt bzw. tritt Verbrennung auf, wird die Temperatur dieser Strömung, die dann als Abgasströmung bezeichnet werden kann, vergleichsweise hoch sein. Diese Möglichkeiten zur Überwachung des Verbrennungsstatus gewährleisten durch eine mehr oder weniger direkte Interaktion mit dem Brennerbereich bzw. den darin generierten Verbrennungsabgasen eine vergleichsweise schnelle und zuverlässige Einschätzung des Verbrennungsstatus. Gleichwohl haben sie den Nachteil, dass die hierfür vorgesehenen Sensoren unmittelbar im Abgasstrom bzw. auch in dem Brennerbereich vorgesehen sein müssen, was einerseits eine entsprechende Standfestigkeit dieser Sensoren erfordert, andererseits aber auch insbesondere hinsichtlich der erforderlichen Abdichtung zu baulichen Problemen führt.

In der EP 0 27.1 999 A ist ein Heizgerät beschrieben, wobei anhand verschiedener Temperatursensoren, die in einem der Umgebungsluft ausgesetzten Bereich, dem Brenner selbst oder dem Wärmetauschergehäuse angeordnet sind, verschiedene Betriebszustände des Heizgerätes durch den Vergleich der ermittelten Temperaturgrößensignale mit voreingestellten Referenzwerten gesteuert werden. Zur Beurteilung des Flammstatus wird dabei ein im Brennerbereich verbauter Flammsensor eingesetzt.

In der EP 0 845 637 A wird zur Ermittlung des Flammstatus der im Brenner verbaute Glühstift verwendet. Die Beurteilung des Flammstatus erfolgt anhand des Vergleichs des Widerstandes des Glühstifts mit einem Referenzwert, der der Umgebungstemperatur angepasst werden kann.

Die vorliegende Erfindung hat die Aufgabe, ein Fahrzeugheizgerät bzw. ein Verfahren zur Flammerkennung in einem Fahrzeugheizgerät vorzusehen, mit welchen in einfacher, gleichwohl aber zuverlässiger Art und Weise der Verbrennungsstatus in einem Fahrzeugheizgerät beurteilt werden kann.

Gemäß der Erfindung wird diese Aufgabe gelöst durch das im Anspruch 1 definierte Verfahren. Zu dessen Durchführung wird ein Fahrzeugheizgerät benutzt, umfassend einen mit Brennstoff zu speisenden Brennerbereich, einen Wärmetauscherbereich, eine Ansteuervorrichtung zur Einstellung der Brennstoffzufuhr zum Brennerbereich, eine erste Temperatursensoranordnung zur Zufuhr eines in Zusammenhang mit dem Verbrennungsstatus im Brennerbereich stehenden ersten Temperaturgrößensignals zur Ansteuervorrichtung, eine zweite Temperatursensoranordnung zur Zufuhr eines mit einer Umgebungstemperatur in Zusammenhang stehenden zweiten Temperaturgrößensignals zur Ansteuervorrichtung, wobei die Ansteuervorrichtung Flammerkennungsreferenzwert-Einstellmittel aufweist zum Setzen eines Flammerkennungsreferenzwertes in Abhängigkeit von dem zweiten Temperaturgrößensignal und Flammerkennungsmittel aufweist zum Beurteilen des Verbrennungsstatus im Brennerbereich auf der Grundlage des Flammerkennungsreferenzwertes und des ersten Temperaturgrößensignals.

Elementar für die vorliegende Erfindung ist, dass der bei der Beurteilung verwendete Flammerkennungsreferenzwert nicht als fest vorgegebene Größe behandelt wird, sondern sich zumindest in Abhängigkeit von der Umgebungstemperatur verändert. Dies macht es möglich, als dem ersten Temperaturgrößensignal zu Grunde liegende Temperaturgröße eine Temperatur zu wählen, die nicht unmittelbar im Bereich der Verbrennung oder des Abgasstroms vorhanden ist, sondern beispielsweise auch außerhalb dieser Bereiche auftritt. Da derartige weiter vom Bereich der eigentlichen Verbrennung entfernt liegende Bereiche bzw. Temperaturen jedoch stärker mit anderen Größen wechselwirken bzw. weniger direkt einen Schluss auf die Temperatur beispielsweise der Abgasströmung zulassen, bestünde grundsätzlich das Problem, dass mit variierender Umgebungstemperatur auch eine Fehleinschätzung bei der Beurteilung des Verbrennungsstatus auftreten könnte. Da jedoch erfindungsgemäß hier eine Anpassung stattfindet, wird diese Gefahr eliminiert, und es wird möglich, ohne in den internen Bereich des Fahrzeugheizgerätes, in welchem die Verbrennung abläuft bzw. auch die Verbrennungsabgase strömen, eindringen zu müssen, ein Temperaturgrößensignal bereitzustellen, das bei Vergleich mit dem umgebungstemperaturabhängig gesetzten Flammerkennungsreferenzwert eine zuverlässige Beurteilung des Verbrennungsstatus gewährleistet.

Beispielsweise kann vorgesehen sein, dass die Flammerkennungsreferenzwert-Einstellmittel in Zuordnung zu einer höheren Umgebungstemperatur einen höheren Flammerkennungsreferenzwert setzen, wobei es besonders vorteilhaft ist, wenn die Flammerkennungsreferenzwert-Einstellmittel wenigstens in Zuordnung zu einem Umgebungstemperaturbereich den Flammerkennungsreferenzwert auf Grundlage eines linearen Zusammenhangs setzen.

Da der Wärmetauscherbereich einer derjenigen Systembereiche ist, der bei auftretender Verbrennung ebenfalls vergleichsweise stark von den dann lokal vorherrschenden hohen Temperaturen beeinflusst wird, umfasst die erste Temperatursensoranordnung einen die Temperatur im Bereich des Wärmetauscherbereichs erfassenden Temperatursensor. Dazu ist vorgesehen, dass der Wärmetauscherbereich ein Wärmetauschergehäuse umfasst, das an seiner Innenseite von im Brennerbereich generierten Verbrennungsprodukten umströmbar ist und an seiner Außenseite von einem zu erwärmenden Medium umströmbar ist, und dass der Temperatursensor die Temperatur im Bereich des Wärmetauschergehäuses erfasst.

Das erfindungsgemäße Verfahren zur Flammerkennung in einem Fahrzeugheizgerät, umfasst die in Anspruch 1 beschriebenen Merkmale.

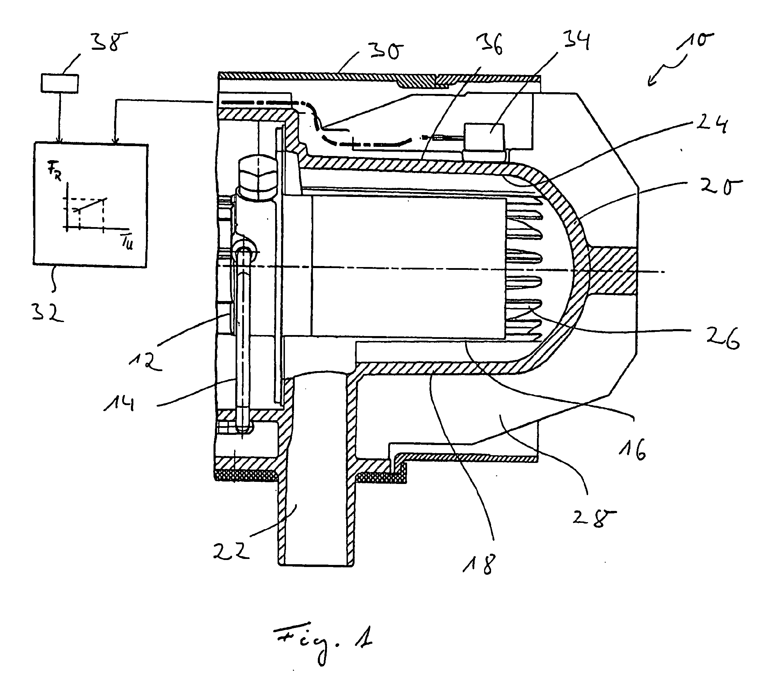

Die vorliegende Erfindung wird nachfolgend mit Bezug auf die beiliegende Fig. 1 detailliert beschrieben, welche eine teilweise im Schnitt dargestellte Ansicht eines Fahrzeugheizgerätes zeigt.

In Fig. 1 ist ein brennstoffbetriebenes Fahrzeugheizgerät allgemein mit 10 bezeichnet. Dieses Fahrzeugheizgerät dient dazu, die in einen Fahrzeuginnenraum einzuleitende Luft zu erwärmen. Das Heizgerät 10 umfasst einen nur teilweise dargestellten Brennerbereich 12, in welchen über eine Brennstoffleitung 14 flüssiger Brennstoff eingespeist wird. Durch ein nicht weiter dargestelltes Gebläse wird in den Brennerbereich 12 weiterhin die erforderliche Verbrennungsluft eingespeist, um in einer Brennkammer ein Gemisch aus Brennstoff und Verbrennungsluft bereitzustellen und dieses zu verbrennen. Die Verbrennungsprodukte verlassen die Brennkammer und treten in ein Flammrohr 16 ein. Dieses ist an einem vom Brennerbereich 12 entfernt liegenden Ende offen und die Verbrennungsprodukte treten dort aus dem Flammrohr 16 aus. Der Brennerbereich 12 bzw. das Flammrohr 16 sind von einem Wärmetauschergehäuse 18 umgeben. Dieses in einem Endbereich kalottenförmig ausgestaltete Wärmetauschergehäuse 18 trennt den Strom der Verbrennungsprodukte von dem Strom der zu erwärmenden Luft. Die das Flammrohr 16 verlassenden Verbrennungsprodukte treffen auf den kalottenartigen Bodenbereich 20 des Wärmetauschergehäuses 18 auf, werden dort nach radial außen umgelenkt und strömen an der Außenseite des Flammrohrs 16 zurück in Richtung zu einem Abgasauslass 22. Um die thermische Wechselwirkung der heißen Verbrennungsprodukte bzw. Abgase mit dem Wärmetauschergehäuse 18 zu verbessern, weist dieses an seiner die Verbrennungsprodukte führenden Innenseite 24 eine Mehrzahl von im Wesentlichen in der Strömungsrichtung sich erstreckenden Wärmeübertragungsrippen 26 auf. Auch an der Außenseite des Wärmetauschergehäuses 18 sind zur verbesserten thermischen Wechselwirkung mit der zu erwärmenden Luft mehrere im Wesentlichen in Luftströmungsrichtung sich erstreckende Wärmeübertragunsgrippen 28 vorgesehen. Um eine definierte Luftströmung zu erlangen, ist das Wärmetauschergehäuse 18 an seiner Außenseite weiterhin von einem Heizgerätegehäuse 30 umgeben. Die durch ein weiter nicht dargestelltes Gebläse geförderte zu erwärmende Luft strömt also in einem näherungsweise ringartigen Strömungsbereich zwischen der Innenseite des Heizgerätegehäuses 30 und der Außenseite des Wärmetauschergehäuses 18 und gelangt somit in denjenigen Bereich, in welchem auch die Wärmeübertragungsrippen 28 vorgesehen sind.

Um den Betrieb des Heizgeräts 10 zu steuern, ist ein schematisch angedeutetes Ansteuergerät 32 vorgesehen. Dieses gibt Ansteuersignale an verschiedene Systembereiche, wie z.B. das bereits angesprochene Luftfördergebläse, eine Brennstoffdosierpumpe, ein Zündorgan und dergleichen aus. Durch diese Ansteuerung wird es beispielsweise durch die gezielte Einstellung der zugeführten Brennstoffmenge und auch der zugeführten Verbrennungsluftmenge möglich, die Heizleistung des Heizgeräts 10 zu verändern.

Um einen geeigneten Betrieb vorsehen zu können, empfängt das Ansteuergerät 32 verschiedene Eingaben, in Reaktion auf welche dann entsprechende Ansteuersignale für die verschiedenen anzusteuernden Systembereiche generiert werden. So empfängt das Ansteuergerät 32 selbstverständlich als Eingabe einen Befehl, welcher indiziert, dass der Verbrennungsbetrieb gestartet werden soll. Weiterhin empfängt das Ansteuergerät 32 ein von einem Temperatursensor 34 ausgegebenes Signal. Dieser Temperatursensor 34 ist an der Außenseite bzw. Außenoberfläche 36 des Wärmetauschergehäuses 18 vorgesehen und erfasst somit dessen Temperatur. Da das Wärmetauschergehäuse 18 auf Grund der erforderlichen Hitzeresistenz im Allgemeinen aus Metallmaterial, wie z.B. Aluminium, aufgebaut ist, wird dieses auf Grund seiner guten Wärmeleitfähigkeit bei thermischer Wechselwirkung mit heißen Verbrennungsprodukten an seiner Innenseite 24 die aufgenommene Wärme sehr schnell zur Außenseite 36 leiten, so dass der Temperatursensor 34 dazu in der Lage ist, ein entsprechendes Temperatursignal in das Ansteuergerät 32 zu leiten. Dieses Temperatursignal steht in engem Zusammenhang mit dem Verbrennungsstatus des Brennerbereichs 12 bzw. des Fahrzeugheizgerätes 10 an sich. Tritt in der Startphase nach Zuführung von flüssigem Brennstoff von Verbrennungsluft und Erregen eines Zündorgans die Verbrennung erstmals auf, so werden dann die heißen Verbrennungsabgase zu einer entsprechenden Erwärmung des Wärmetauschergehäuses 18 führen. Dies wiederum wird sich in einer entsprechenden Veränderung, im Allgemeinen einem entsprechenden Anstieg des Ausgangssignals des Temperatursensors 34, wiederspiegeln.

Die Erkennung, ob bzw. in welchem Ausmaß im Brennerbereich 12 Verbrennung stattfindet, ist vor allem mit Hinblick auf den Schadstoffausstoß von großer Bedeutung. Wird beispielsweise in der Startphase über eine längere Zeitdauer hinweg Brennstoff eingespeist, ohne dass dies zum Start der Verbrennung führt, kann dies zu einer Übersättigung des gesamten Brennerbereichs 12 mit Brennstoff führen, mit der Gefahr, dass auch flüssiger Brennstoff oder Teile desselben ausgestoßen werden und einen nachgeschalteten Katalysator schädigen können bzw. zu einer nicht annehmbaren Umweltschädigung führen. Dies gilt auch für den Fall, dass die ablaufende Verbrennung beispielsweise auf Grund mangelnder Luft- bzw. Sauerstoffzufuhr zum Erlöschen kommt. Eine weiter fortgeführte Brennstoffeinspeisung könnte ebenfalls zu einer Übersättigung des Brennerbereichs 22 mit den beschriebenen nachteilhaften Folgen führen.

Es wird daher beim Betrieb bzw. in der Startphase eines derartigen Fahrzeugheizgerätes 10 so vorgegangen, dass anhand des vom Temperatursensor 34 ausgegebenen Temperatursignals überwacht wird, ob im Brennerbereich 12 die Verbrennung gestartet wurde bzw. abläuft. Hierzu wird beruhend auf dem Ausgangssignal des Temperatursensors 34 und einem Flammerkennungsreferenzwert ein Vergleich vorgenommen. Hierzu kann beispielsweise direkt das vom Temperatursensor 34 gelieferte Signal herangezogen werden oder es kann ein dieses Ausgangssignal repräsentierender Wert generiert werden, der dann mit der Vergleichsgröße, nämlich dem Flammerkennungsreferenzwert, verglichen wird. Deutet dieser Vergleich darauf hin, dass der zum Vergleich herangezogene Wert, also beispielsweise das Sensorsignal des Temperatursensors 34, über dem Flammerkennungsreferenzwert liegt, wird dies so gewertet, dass die Verbrennung gestartet wurde bzw. stattfindet. Liegt die zum Vergleich herangezogene Größe jedoch unter dem zugeordneten Referenzwert, so ist dies ein Indiz dafür, dass die Verbrennung nicht oder nicht im gewünschten Ausmaß stattfindet, was dann geeignete Maßnahmen, wie z.B. das Drosseln bzw. Abstellen der Brennstoffzufuhr, zur Folge haben kann.

Da bei dem Fahrzeugheizgerät 10 der Temperatursensor 34 in einem Bereich liegt, der nicht nur unter dem Einfluss der an der Innenseite 24 des Wärmetauschergehäuses 18 strömenden Verbrennungsprodukte steht, sondern beispielsweise auch beeinflusst ist durch die Temperatur der herangeführten und in den Fahrzeuginnenraum einzuspeisenden Luft, sieht die vorliegende Erfindung weiter vor, dass der zum Beurteilen des Verbrennungsstatus herangezogene Referenzwert nicht fest vorgegeben ist, sondern in Abhängigkeit von der Umgebungstemperatur variiert. Es ist hierzu ein weiterer Temperatursensor 38 vorgesehen, der die Umgebungstemperatur oder eine damit in Zusammenhang stehende Größe misst und ein entsprechendes Signal in das Ansteuergerät 32 einspeist. Auf der Grundlage dieses Signals wird im Ansteuergerät 32 wie auf der Grundlage dieses die Umgebungstemperatur T_{U} reflektierenden Signals dann ein in Zuordnung dazu vorgegebener Flammerkennungsreferenzwert F_{R} ausgewählt und für den Vergleich mit der Vergleichsgröße, also beispielsweise dem Signal des Temperatursensors 34, verwendet. Hierzu kann im Ansteuergerät 32 bzw. einem darin enthaltenen Speichermedium ein die Zuordnung herstellendes Kennfeld abgelegt sein; selbstverständlich kann die Zuordnung auch durch Berechnung mit einem mathematischen Zusammehang erfolgen. Hier kann beispielsweise vorgesehen sein, dass die Zuordnung bzw. der Zusammenhang zwischen der Umgebungstempertaur T_{U} bzw. dem diese reflektierenden Signal und dem Flammerkennungsreferenzwert F_{R} zumindest in einem größeren Temperaturbereich linear ist, beispielsweise so, dass eine ansteigende Umgebungstemperatur Tu auch zu einem Anstieg im Flammerkennungsreferenzwert F_{R} führt, also höheren Umgebungstemperaturen auch höhere Flammerkennungsreferenzwerte zugeordnet sind.

Durch diese erfindungsgemäße variable Vorgabe des Flammerkennungsreferenzwertes F_{R} kann dafür gesorgt werden, dass im gesamten möglichen Temperaturbereich für die zu erwärmende und in den Fahrzeuginnenraum einzuleitende Luft sichergestellt ist, dass bei auch dadurch möglicherweise beeinflusstem Ausgangssignal des Temperatursensors 34 gleichwohl die vorgenommene Beurteilung des Verbrennungsstatus mit hoher Zuverlässigkeit erfolgen kann. So kann niedrigen Umgebungstemperaturen auch ein entsprechend tief liegender Referenzwert zugeordnet werden, was auch eine entsprechend schnelle Erkennung des Verbrennungsstarts ermöglicht. Höheren bzw. sehr hohen Umgebungstemperaturen, beispielsweise im Bereich von bis zu 20°C, kann dann ein entsprechend höherer Referenzwert zugeordnet werden.

Es sei darauf hingewiesen, dass selbstverständlich unter Beibehalt der Erfindungsprinzipien vom dargestellten Aufbau bzw. den vorangehend beschriebenen Arbeitsprinzipien abgewichen werden kann. So muss der Temperatursensor 34 nicht notwendigerweise in direktem thermischen Kontakt mit der Außenseite 36 des Wärmetauschergehäuses 18 stehen. Er könnte zu diesem auch einen geringfügigen Abstand aufweisen oder beispielsweise auch in Kontakt mit einer der Wärmeübertragungsrippen 28 stehen. Selbstverständlich könnte auch vorgesehen sein, dass der Temperatursensor 34 in eine Aussparung im Wärmetauschergehäuse 18 eintaucht, ggf. so weit, dass er auch unmittelbar in Kontakt mit den entlang der Innenseite 24 desselben strömenden Verbrennungsprodukten treten kann. Auch ist es selbstverständlich möglich, in Anpassung an jeweils verschiedene konstruktive Ausführungen derartiger Heizgeräte auch unterschiedliche Zusammenhänge zwischen der Umgebungstemperatur und dem Flammerkennungsreferenzwert vorzusehen, die von dem dargestellten bzw. beschriebenen linearen Verlauf abweichen können. Dies kann auch davon abhängen, an welcher Position der Temperatursensor 34 in Zuordnung zu verschiedenen durch die ablaufende Verbrennung thermisch beeinflussbaren Komponenten des Fahrzeugheizgerätes 10 positioniert wird.

## Patentansprüche

1. Verfahren zur Flammerkennung in einem Fahrzeugheizgerät, dieses umfassend:
- einen mit Brennstoff zu speisenden Brennerbereich (12),
- einen Wärmetauscherbereich (18),
- eine Ansteuervorrichtung (32) zur Einstellung der Brennstoffzufuhr zum Brennerbereich (12),
- eine erste Temperatursensoranordnung (34) zur Zufuhr eines in Zusammenhang mit dem Verbrennungsstatus im Brennerbereich (12) stehenden ersten Temperaturgrößensignals zur Ansteuervorrichtung (32), wobei der Wärmetauscherbereich (18) ein Wärmetauschergehäuse (18) umfasst, das an seiner Innenseite (24) von im Brennerbereich (12) generierten Verbrennungsprodukten umströmbar ist und an seiner Außenseite (36) von einem zu erwärmendem Medium umströmbar ist, und die erste Temperatursensor anordnung (34) die Temperatur im Be-reich der Außenseite des Wärmetauschergehäuses (18) erfasst.
- eine zweite Temperatursensoranordnung (38) zur Zufuhr eines mit einer Umgebungstemperatur (T_{U}) in Zusammenhang stehenden zweiten Temperaturgrößensignals zur Ansteuervorrichtung (32), **gekennzeichnet durch** das
a) Setzen eines Flammerkennungsreferenzwertes (F_{R}) in Abhängigkeit von der Umgebungstemperatur (T_{U}) vermittels Flammerkennungsreferenzwert-Einstellmittel der Ansteuervorrichtung (32) zum Setzen eines Fiammerkennungsreferenzwertes (F_{R}) in Abhängigkeit von dem zweiten Temperaturgrößensignal,
b) Beurteilen des Verbrennungsstatus in dem Fahrzeugheizgerät (10) auf der Grundlage eines Vergleichs des Flammerkennungsreferenzwertes (F_{R}) mit einer den Verbrennungsstatus repräsentierenden Temperaturgröße vermittels Ftammerkennungsmittet der Ansteuervorrichtung (32) zum Beurteilen des Verbrennungsstatus im Brennerbereich (12) auf der Grundlage des Flammerkennungsreferenzwertes (F_{R}) und des ersten Temperaturgrößensignals.

2. Verfahren nach Anspruch 1,
**dadurch gekennzeichnet, dass** die Flammerkennungsreferenzwert-Einstellmittel in Zuordnung zu einer höheren Umgebungstemperatur einen höheren Flammerkennungsreferenzwert (F_{R}) setzen.

3. Verfahren nach Anspruch 1 oder 2,
**dadurch gekennzeichnet, dass** die Flammerkennungsreferenzwert-Einstellmittel, wenigstens in Zuordnung zu einem Umgebungstemperaturbereich den Flammerkennungsreferenzwert (F_{R}) auf Grundlage eines linearen Zusammenhangs setzen.

## Claims

1. Method for flame detection in a vehicle heating device, the latter comprising:
- a burner section (12) to be provided with fuel,
- a heat exchanger section (18),
- a control device (32) for setting the fuel supply to the burner section (12),
- a first temperature sensor arrangement (34) for sending a first temperature variable signal associated to the combustion status inside the burner section to the control device (32), the heat exchanger section (18) comprising a heat exchanger housing (18) along which combustion products generated in the burner section (12) may flow at its inner side (24) and along which a medium to be heated may flow along at its outer side (36), and wherein the first temperature sensor arrangement (34) detects the temperature in the area of the outer side of said heat exchanger housing (18),
- a second temperature sensor arrangement (38) for sending a second temperature variable signal associated to the ambient temperature (Tᵤ) to said control device (32),
**characterized by**
a) setting a flame detection reference value (F_{R}) depending on the ambient temperature (Tᵤ) via flame detection reference value setting means of said control device (32) for setting a flame detection reference value (F_{R}) depending on said second temperature variable signal,
b) assessing the combustion status in said vehicle heating device (10) on the basis of a comparison of said flame detection reference value (F_{R}) with a temperature variable representing the combustion status via flame detection means of said control device (32) for assessing said combustion status in the burner section (12) on the basis of said flame detection reference value (F_{R}) and said first temperature variable signal.

2. Method according to claim 1,
**characterized by** said flame detection reference value setting means setting a higher flame detection reference value (F_{R}) in association with to a higher ambient temperature.

3. Method according to claim 1 or 2,
**characterized by** said said flame detection reference value setting means setting said flame detection reference value (F_{R}) on the basis of a linear relation, at least in association with an ambient temperature range.

## Revendications

1. Une méthode pour la détection de flamme dans un dispositif de chauffage d'un véhicule, comprenant:
- une zone de brûleur, à alimenter avec du combustible (12),
- une zone d'échangeur de chaleur (18),
- un dispositif de contrôle (32) pour ajuster l'alimentation en combustible de la zone de brûleur (12),
- un premier arrangement de capteur de température (34) pour envoyer un premier signal de variable de température associé à l'état de combustion au dispositif de contrôle (32), la zone d'échangeur de chaleur (18) comprenant un boîtier d'échangeur de chaleur (18), des produits de combustion générés dans la zone de brûleur (12) pouvant circuler le long du côté intérieur (24) de ce dernier et un medium à chauffer pouvant circuler le long du côté extérieur de ce dernier, et le premier arrangement de capteur de température (34) captant la température dans la zone du côté extérieur du boîtier d'échangeur de chaleur (18),
- un deuxième arrangement de capteur (38) pour envoyer un deuxième signal de variable de température associé à la température ambiante (Tᵤ) au dispositif de contrôle (32)
**caractérisé par**
a) l'établissement d'une valeur de référence de détection de flamme (F_{R}) dépendant de la température ambiante (Tᵤ) par des moyens de réglage de la valeur de référence de détection de flamme du dispositif de contrôle (32) pour établir une valeur de référence de détection de flamme (F_{R}) dépendant du deuxième signal de variable de température,
b) l'évaluation de l'état de combustion dans le dispositif de chauffage pour un véhicule (10) sur la base d'une comparaison de la valeur de référence de détection de flamme (F_{R}) avec une variable de température représentant l'état de combustion à l'aide de moyens de détection de flamme du dispositif de contrôle (32) pour évaluer l'état de combustion dans la zone de brûleur (12) sur la base de la valeur de référence de détection de flamme (F_{R}) et du premier signal de variable de température.

2. La méthode selon la revendication 1,
**caractérisée par** les moyens d'ajustement de valeur de référence de détection de flamme (F_{R}) fixant une valeur de référence de détection de flamme (F_{R}) plus élevée associée à une plus grande température ambiante.

3. La méthode selon la revendication 1 ou 2,
**caractérisée par** les moyens d'ajustement de valeur de référence de détection de flamme (F_{R}), au moins en association à une gamme de température ambiante, fixant la valeur de référence de détection de flamme (F_{R}) sur la base d'une relation linéaire.
